# EUROPÄISCHE PATENTSCHRIFT

(11) **EP 1 599 523 B1**
(45) Veröffentlichungstag und Bekanntmachung des Hinweises auf die Patenterteilung: **29.05.2013**
(21) Anmeldenummer: 04710862.6
(22) Anmeldetag: 13.02.2004
(51) Int. Cl.: C08G 18/22, C08G 18/80

(54) **POLYURETHAN-BESCHICHTUNGSSYSTEME**
POLYURETHANE COATING SYSTEMS
SYSTEMES DE REVETEMENT POLYURETHANE

(30) Priorität: 26.02.2003 DE 10308104
(43) Veröffentlichungstag der Anmeldung: 30.11.2005
(73) Patentinhaber: Bayer Intellectual Property GmbH, 40789 Monheim (DE)
(72) Erfinder: GÜRTLER, Christoph, 50676 Köln (DE); MAZANEK, Jan, 51061 Köln (DE); PETZOLDT, Joachim, 40789 Monheim (DE); SCHMIDT, Heinz, 50374 Erftstadt (DE); NOWAK, Stephan, 50827 Köln (DE)
(74) Vertreter: BIP Patents
(86) Internationale Anmeldenummer: PCT/EP2004/001420
(87) Internationale Veröffentlichungsnummer: WO 2004/076519

(56) Entgegenhaltungen:
- EP-A- 0 625 530
- DE-A- 19 748 764
- US-A- 2 916 464
- US-A- 5 043 373
- PATENT ABSTRACTS OF JAPAN vol. 1997, no. 01, 31. Januar 1997 (1997-01-31) -& JP 08 243491 A (NISSHIN STEEL CO LTD), 24. September 1996 (1996-09-24)

## Beschreibung

Die vorliegende Erfindung betrifft neue Einkomponenten-Polyurethan-Systeme, deren Herstellung und Verwendung zur Herstellung von Lacken, Farben und Klebstoffen.

Einkomponenten(1K)-Einbrennsysteme auf Polyurethanbasis sind bei Raumtemperatur lagerstabile, in der Hitze härtbare Rohstoffe zur Herstellung von Lacken, Farben und Klebstoffen. Sie bestehen in der Regel aus blockierten Polyisocyanaten, die bei der thermischen Aushärtung mit Hydroxylgruppen enthaltenden Polyestern, Polyacrylaten, anderen hydroxyfunktionalen Polymeren bzw. Gemischen verschiedener Polymere abreagieren. Eine andere Möglichkeit, Rohstoffe für bei Raumtemperatur lagerstabile Einbrennlacke zu erhalten, ist die teilweise Blockierung der Isocyanatgruppen von Polymeren, die sowohl blockierte Isocyanat- als auch Hydroxylgruppen enthalten.

Die wichtigsten Verbindungen, die zur Blockierung von Polyisocyanaten bzw. 1K-Einbrennsystemen eingesetzt werden, sind ε-Caprolactam, Methyl-ethyl-ketoxim (Butanonoxim), sekundäre Amine sowie Triazol- und Pyrazolderivate, so wie sie z.B. in EP-A 0 576 952, EP-A 0 566 953, EP-A 0 159 117, US-A 4 482 721, WO 97/12924 oder EP-A 0 744 423 beschrieben sind. Auch eine Blockierung mit Malonsäureester ist möglich. Bei dieser Art der Blockierung wird jedoch nicht das Blockierungsmittel zurückgespalten, sondern es erfolgt eine Umesterungsreaktion am Malonsäurediethylester Rest.

Je nach verwendetem Blockierungsmittel werden bei der Herstellung von Beschichtungen aus den 1K-PUR-Einbrennsystemen Temperaturen von 100-160°C verwendet. Die Auswahl des geeigneten Blockierungsmittels beim jeweiligen System erfolgt aber nicht nur nach der Einbrenntemperatur. Auch andere Faktoren wie beispielsweise Vergilbungsneigung, Geruch und Lagerstabilität der Systeme spielen eine wichtige Rolle. Da man gerade in letzter Zeit bestrebt ist, die Einbrenntemperatur von Lacksystemen möglichst niedrig zu halten, muss jeweils ein Kompromiss bezüglich der Zusammensetzung der Lacke und den Eigenschaften der Beschichtung gefunden werden. Daraus erkennt man, dass ein Bedarf an neuen Einbrennsystemen besteht, die bereits bei niedrigeren Einbrenntemperaturen optimale anwendungstechnische Eigenschaften aufweisen.

In der Vergangenheit wurden schon viele Versuche unternommen, die Einbrenntemperatur von 1K-Systemen durch den Einsatz von Katalysatoren herabzusetzen. So werden z.B. in der EP-A 0 761 705 organische Wismut-Verbindungen für die Katalyse von teilweise oder ganz blockierten Polyisocyanaten beansprucht. Die US-A 5 859 165 beschreibt Reaktionsprodukte von Mangan, Kobalt, Nickel, Kupfer, Zink, Germanium, Antimon oder Wismut bzw. deren Oxiden als Katalysatoren für blockierte Poly(thio-)isocyanate. In der EP-A 0 726 284 werden allgemein Metallsalze und/oder Metallkomplexe zur Katalyse der Reaktion von blockierten Polyisocyanaten mit Polyolen beschrieben, in den Beispielen werden allerdings lediglich Dibutylzinndilaurat und -acetat konkret offenbart.

Um die Verwendung von organischen Lösungsmitteln zu reduzieren und damit die Emission dieser Lösungsmittel in die Umwelt zu reduzieren, und um die Arbeitsbedingungen in der Lackierstrasse durch eine verringerte Lösungsmittelemission zu verbessern, wurden in den letzten Jahren 1K Beschichtungssysteme entwickelt, die als überwiegenden Lösemittelbestandteil das Lösungsmittel Wasser enthalten. Einen Überblick über diese Technik geben D. A. Wicks und Z. W. Wicks in Progress in Organic Coatings 2001, 41(1-3), 1-83. Diese Technik befindet sich in zunehmender Verbreitung. Die Gegenwart des Lösungsmittels bzw. des Dispergiermittels Wasser stellt an die Verwendung von Katalysatoren andere Ansprüche, als dies bei sogenannten Lösungsmittelhaltigen Systemen der Fall ist. So muss bei letzteren bei der Verwendung der Katalysatoren nicht darauf geachtet werden, dass der verwendete Katalysator Wasser- bzw. Hydrolyse-stabil ist. Die gängigen Katalysatoren, die in lösungsmittelhaltigen 1K-Systemen Anwendung finden, können daher nicht regelmäßig in sogenannten wässrigen Systemen eingesetzt werden. Bekannte Vertreter derartiger Katalysatoren, die über eine hohe Wirksamkeit (also eine deutliche Absenkung der Einbrenntemperaturen) verfügen sind z.B. Wismut-2-ethylhexanoat oder organische Zinn-IV-Verbindungen wie z.B. Dibutylzinndilaurat (DBTL). Daneben sind eine Reihe weiterer Verbindungen bekannt geworden, die in dem oben zitierten Artikel von Wicks et al. beschrieben wurden. Es ist ebenso bekannt, dass Wismut-carboxylate in Wasser hydrolysiert werden.

Bislang sind nur wenige Katalysatoren für die Beschleunigung der Aushärtung von wässrigen Ein-Komponenten Systemen bekannt geworden. In der WO 95/04093 werden Systeme auf Organo-Zinn-Basis geschildert. Es handelt sich hierbei um Katalysatoren, die insbesondere in Systemen für die Elektrotauchlackierung eingesetzt werden, bei der die Aushärtung üblicherweise bei hohen Temperaturen von ca. 170°C und mehr erfolgt. Die jeweils verwendeten Blockierungsmittel und Polyisocyanate sind in den Beispielen nicht genannt. Allerdings ist die Verwendung von Organo-Zinn Katalysatoren aufgrund ökologischer Erwägungen nicht wünschenswert. Die Wirksamkeit dieser und anderer Katalysatoren im Vergleich zu anderen Katalysatorsystemen wird auch in der folgenden Anmeldung beschrieben.

Es werden in der Beschreibung der WO 00/47642, Seite 4, sehr spezielle Beispiele für Katalysatoren für 1K-Wasser Anwendungen genannt. So werden Organo-Zinn- und Bleiverbindungen beschrieben, deren Einsatz in Beschichtungen aus ökologischen Gesichtspunkten jedoch nicht wünschenswert ist.

Weiterhin findet sich in der WO 00/47642 ein Hinweis auf einen Katalysator für wässrige Einkomponenten Systeme, der auf der Umsetzung von Wismutoxid mit einer Carbonsäure mit einer Kohlenstoff-Kettenlänge von C₁₁ bis C₃₆ basiert. Zwar findet bei diesem System auch eine Hydrolyse des Katalysators statt, allerdings soll sich der Katalysator bei den relativ hohen Einbrenntemperaturen von mehr als 165°C bis zu 180°C wieder aus den Bestandteilen bilden und über eine hohe katalytische Aktivität verfügen. Die Verwendung dieses Katalysatorsystems ist jedoch an sehr spezielle Harze bzw. Alkoholkomponenten gekoppelt.

Die Wirksamkeit des beschriebenen Katalysatorsystems ist nur für spezielle, in diesem Fall kationisch hydrophilierte Harze beschrieben, d.h. solche, die durch Umsetzung z.B. eines Bisphenol A haltigen Epoxydharzes mit einem Amin erhalten werden. Je nach verwendetem Amin (primär, sekundär, tertiär) und in Gegenwart eines Überschusses des Epoxydharzes und in Gegenwart von Wasser und Neutralisationssäure kann es auch zur Bildung von quartären Ammoniumgruppen kommen. Somit ist das Harz grundsätzlich aminhaltig, was für die Entwicklung eines Automobil-Füllers, der eine niedrige Vergilbung und eine gute Langzeitbeständigkeit haben soll, ungeeignet ist.

Ein wässriges 1K-PUR System könnte alternativ zur kationischen Hydrophilierung durch den Zusatz von oberflächenaktiven Substanzen oder Emulgatoren hergestellt werden. Für ein so derartiges Lacksystem ist das dort vorgestellte Katalysatorsystem nicht beschrieben.

Weiterhin ist ein Hydrophilierung mit z.B. anionischen Hydrophilierungen (z.B. durch Carbonsäuren) oder nichtionische Hydrophilierungen wie z.B. durch Polyether (eingebaut in das Harz und nicht wie bei den Emulgatoren als einzelner Bestandteil) zur Herstellung eines wässrigen 1K-Systems möglich. Für ein solches Lacksystem ist das dort vorgestellte Katalysatorsystem jedoch ebenfalls nicht beschrieben worden.

Aufgrund der unterschiedlichen Möglichkeiten der Hydrophilierung von 1K-Systemen (kationisch, durch Emulgatoren, durch anionische oder nichtionische Hydrophilierung) ist die Verwendung und Wirksamkeit des in der WO 00/47642 beschriebenen Katalysatorsystems in anderen als kationisch hydrophilierten Systemen nicht naheliegend. So kann die kationische Hydrophilierung z.B. durch Ammoniumsalze als Ligand zur Stabilisierung wirken. Diese stabilisierende Wirkung entfällt bei den 1K-Systemen, die nicht kationisch hydrophiliert sind.

Weiterhin werden in der vorgenannten Publikation nur.Alkohol-blockierte Isocyanate beschrieben. Ein typisches Blockierungsmittel für die Blockierung des dort ausschließlich beschriebenen Isocyanats (polymeres) MDI (Methylenphenyldiisocyanat) ist das Butoxyethoxyethanol (Butyl Carbitol). Daneben sind auch 2-Ethoxy-ethanol und 2-Methoxyethanol genannt. Die Abspaltung dieses Blockierungsmittels (eigentlich handelt es sich um eine Urethanspaltung) erfordert hohe Temperaturen, es wird bei Temperaturen von 165-180°C über einen Zeitraum von 20 Minuten eingebrannt.

Für die angestrebte Verwendung als Beschichtungsmittel für Automobile ist es wünschenswert, Katalysatoren zu finden, die die Aushärtung eines Ein-Komponenten Systems bei Temperaturen von maximal 140°C ermöglichen, vorzugsweise bei noch niedrigerer Temperatur.

Somit ist derzeit kein Katalysator bekannt, dessen Einsatz in wässrigen Systemen auf Basis einer großen Bandbreite von Blockierungsmitteln, blockierten (Poly-)Isocyanaten und Hydrophilierungsmethoden es ermöglichen würde, die Einbrenntemperaturen auf das gewünschte Maß abzusenken.

Es bestand damit die Aufgabe, einen allgemein verwendbaren Katalysator zu finden, der bei niedrigen Einbrenntemperaturen wirksam ist und mit einer Vielzahl von Blockierungsmitteln und Harzen und Hydrophilierungsmitteln wirkt. Gleichzeitig sollten ökologische Gesichtspunkte berücksichtigt werden.

Diese Aufgabe wurde mit der Bereitstellung der erfindungsgemäßen Katalysatoren auf der Basis von bestimmten Molybdän- und/oder Wolfram-Verbindungen gelöst.

Die Verwendung von Molybdän- und/oder Wolfram-Verbindungen zur Katalyse von blockierten Polyisocyanaten bzw. Einkomponenten-Einbrennsystemen war bisher nicht bekannt. Für die Verwendung als Katalysator kommen insbesondere die Verbindungen des Molybdäns und/oder Wolframs in ihren höheren Oxidationsstufen in Frage. Verbindungen des Molybdäns z.B. in der Oxidationsstufe + 6 (z.B. Lithium- und Natriummolybdat; siehe auch US-A 2 916 464 zur Herstellung von Polyurethanschäumen oder auch in Saunders/Frisch: High Polymers, Vol. XVI (1962), S. 169) wurden zur Katalyse der Reaktionen von nicht blockierten Isocyanaten mit Alkoholen eingesetzt. Die Beschleunigung der Reaktion von blockierten Isocyanaten mit z.B. Polyolen in Gegenwart von Molybdänverbindungen wurde somit vom Stand der Technik nicht nahegelegt.

Es wurde gefunden, dass durch die Verwendung der erfindungsgemäßen Katalysatoren in 1K-Systemen auf Basis von blockierten Isocyanaten die Einbrenntemperatur je nach eingesetztem Blockierungsmittel um ca. 20°C abgesenkt werden kann. Damit können niedrige Einbrenntemperaturen von ca. 130°C erreicht werden. Die erfindungsgemäßen Katalysatoren sind allerdings bereits bei einer niedrigen Temperatur, beispielsweise von 120°C, ausreichend aktiv, wie in den folgenden Beispielen gezeigt wird.

Gegenstand der vorliegenden Erfindung sind Einkomponenten-Einbrennsysteme auf Polyurethanbasis, dadurch gekennzeichnet, dass sie eine oder mehrere organische und/oder anorganische Verbindungen des Molybdäns und/oder Wolframs enthalten, in welchen das Molybdän und/oder Wolfram eine Oxidationsstufe von mindestens + 4 hat, ausgewählt aus der Gruppe bestehend aus Ammoniummolybdat, Lithiummolybdat, Natriummolybdat, Kaliummolybdat, Rubidiummolybdat, Cäsiummolybdat, Ammoniumparamolybdat (NH₄)₆Mo₇O₂₄ 4H₂O Molybdänyl-bis-acetylacetonat MoO₂(C₅H₇O₅)₂, Molybdändioxidtetramethylheptadionat MoO₂(TMHD)₂, Molybdänalkoholate aus 1,2-, 1,3- oder 1,4-Diolen wie Ethylenglykol, Propylenglykol oder 1,4-Butandiol, Molybdänsäure, Tetraethylammoniummolybdat, Natriumwolframat, Magnesiummolybdat, Calciummolybdat, Wolframsäure, Lithiumwolframat und Phosphorwolframsäure.

Vorzugsweise sind diese Einkomponentensysteme dadurch gekennzeichnet, dass sie
(a) blockierte Polyisocyanate,
(b) Polymere mit gegenüber Polyisocyanaten reaktiven Gruppen,
(c) eine oder mehrere organische und/oder anorganische Verbindungen des Molybdäns und/oder Wolframs enthalten, in welchen das Molybdän und/oder Wolfram eine Oxidationsstufe von mindestens + 4 hat, ausgewählt aus der Gruppe bestehend aus Ammoniummolybdat, Lithiummolybdat, Natriummolybdat, Kaliummolybdat, Rubidiummolybdat, Cäsiummolybdat, Ammoniumparamolybdat (NH₄)₆Mo₇O₂₄ 4H₂O Molybdänyl-bis-acetylacetonat MoO₂(C₅H₇O₅)₂, Molybdändioxidtetramethylheptadionat MoO₂(TMHD)₂, Molybdänalkoholate aus 1,2-, 1,3- oder 1,4-Diolen wie Ethylenglykol, Propylenglykol oder 1,4-Butandiol, Molybdänsäure, Tetraethylammoniummolybdat, Natriumwolframat, Magnesiummolybdat, Calciummolybdat, Wolframsäure, Lithiumwolframat und Phosphorwolframsäure.,
(d) Wasser und/oder organische Lösemittel oder Lösemittelgemische und
(e) gegebenenfalls weitere Zusatzstoffe und Hilfsmittel
enthalten, wobei die Mengen an (a) + (b) 20 bis 89,9 Gew.-Teile, (c) 0,01 bis 5 Gew.-Teile, (d) 10 bis 70 Gew.-Teile und (e) 0 bis 10 Gew.-Teile betragen und die Summe der Gew.-Teile der Komponenten (a) bis (e) 100 beträgt.

Gegenstand der Erfindung sind auch Verfahren zur Herstellung der Einkomponenten-Einbrennsysteme der allgemeinen Zusammensetzung (a) bis (e).

Ein weiterer Gegenstand der Erfindung ist die Verwendung der erfindungsgemäßen Einkomponenten-Einbrennsysteme zur Herstellung von Lacken, Farben und anderen Einbrennsystemen wie Klebstoffen oder Elastomeren und die daraus hergestellten Beschichtungen.

Die erfindungsgemäßen 1K-Einbrennsysteme enthalten als Vernetzerkomponente blockierte Polyisocyante (a) wie sie in an sich bekannter Weise durch Umsetzung beliebiger organischer Polyisocyanate A) mit beliebigen Blockierungsmitteln B) und gegebenenfalls weiteren Aufbaukomponenten C) erhältlich sind. Geeignete Polyisocyanate A) zur Herstellung der blockierten Polyisocyanate (a) sind beliebige organische Polyisocyanate, die aus den klassischen Polyurethansystemen zur Vernetzung von Verbindungen mit aktivem Wasserstoff bekannt sind, d.h. aliphatische inclusive der cycloaliphatischen, aromatische und heterocyclische Polyisocyanate mit mindestens zwei Isocyanatgruppen und Gemische davon. Typische Beispiele für geeignete Polyisocyanate A) sind aliphatische Isocyanate wie Di- oder Triisocyanate, z.B. Butandiisocyanat (BDI), Pentandüsocyanat, Hexandiisocyanat (HDI), 4-Isocyanatomethyl-1,8-octandiisocyanat (Triisocyanatononan, TIN) oder cyclische Systeme, wie 4,4'-Methylen-bis(cyclohexylisocyanat) (Desmodur^{®} W, Bayer AG, Leverkusen), 3,5,5-Trimethyl-1-isocyanato-3-isocyanatomethylcyclohexan (IPDI) sowie ω,ω'-Diisocyanato-1,3-dimethylcyclohexan (H₆XDI). Beispiele für aromatische Polyisocyanate sind 1,5-Naphthalendiisocyanat, Diisocyanato-diphenylmethan (MDI) bzw. Roh-MDI, Diisocyanatomethylbenzol (TDI), insbesondere das 2,4 und das 2,6-Isomere und technische Gemische der beiden Isomeren sowie 1,3-Bis(isocyanatomethyl)benzol (XDI). Ebenfalls gut geeignet sind auch Polyisocyanate, die durch Umsetzung der Di- oder Triisocyanate mit sich selbst über Isocyanatgruppen erhältlich sind, wie Uretdione oder Carbodiimidverbindungen oder wie Isocyanurate oder Iminooxadiazindione, die durch Reaktion dreier Isocyanatgruppen gebildet werden.

Als Polyisocyanate geeignet sind auch oligomere Polyisocyanate mit Biuret-, Allophanat- und Acylharnstoff-Strukturelementen sowie beliebige Gemische der genanten Polyisocyanate. Es können auch Gemische von Polyisocyanaten mit den genannten Struktureinheiten bzw. Gemische der modifizierten Polyisocyanate mit den monomeren Isocyanaten verwendet werden. Die so modifizierten Polyisocyanate können auch anteilig mit anderen gegenüber Isocyanaten reaktionsfähigen Gruppen präpolymerisiert sein. Anteilig modifizierte Polyisocyanate sind durchaus bevorzugt. Gut geeignet sind ebenfalls Polyisocyanatpräpolymere, die durchschnittlich mehr als eine Isocyanatgruppe pro Molekül aufweisen. Sie werden durch Vorreaktion eines molaren Überschusses beispielsweise eines der obengenannten Di, Tri- oder Polyisocyanate und modifizierter Polyisocyanate mit einem organischen Material erhalten, das mindestens zwei aktive Wasserstoffatome pro Molekül aufweist, z.B. in Form von Hydroxygruppen. Sie können ähnlich anteilig präpolymerisiert sein wie im nächsten Abschnitt beschrieben.

Weiterhin geeignet sind niedermolekulare, Urethangruppen enthaltende Polyisocyanate, wie sie durch Umsetzung von im Überschuss eingesetztem Diisocyanate, vorzugsweise IPDI oder TDI, mit einfachen mehrwertigen Alkoholen des Molekulargewichtsbereiches 62-300, insbesondere mit Trimethylolpropan oder Glycerin, erhalten werden können.

Geeignete Polyisocyanate A) sind ferner die bekannten, endständige Isocyanatgruppen aufweisenden Prepolymere, wie sie insbesondere durch Umsetzung der oben genannten einfachen Polyisocyanate, vor allem Diisocyanate, mit unterschüssigen Mengen an organischen Verbindungen mit mindestens zwei gegenüber Isocyanaten reaktionsfähigen funktionellen Gruppen zugänglich sind. In diesen bekannten Prepolymeren entspricht das Verhältnis von Isocyanat-gruppen zu gegenüber NCO reaktiven Wasserstoffatomen 1,05 : 1 bis 10 : 1, vorzugsweise 1,1 : 1 bis 3 : 1, wobei die Wasserstoffatome vorzugsweise aus Hydroxylgruppen stammen. Die Art und Mengenverhältnisse der bei der Herstellung von NCO-Prepolymeren eingesetzten Ausgangsmaterialien werden im übrigen vorzugsweise so gewählt, dass die NCO-Prepolymeren vorzugsweise eine mittlere NCO-Funktionalität von 2 bis 3 und eine zahlenmittlere Molmasse von 500-10000, vorzugsweise 800-4000 aufweisen.

Bevorzugte Polyisocyanate A) sind solche, die eine Uretdion-, Isocyanurat-, Iminooxadiazindion-, Acylharnstoff-, Urethan-, Biuret- oder Allophanatstruktur enthalten, wobei diejenigen Polyisocyante auf Basis von 1,6-Hexamethylendiisocyanat, 3,5,5-Trimethyl-1-isocyanato-3-isocyanatomethylcyclohexan (IPDI), ω,ω'-Diisocyanato-1,3-dimethylcyclohexan (H₆XDI) sowie 4,4'-Methylen-bis(cyclohexylisocyanat) (Desmodur^{®} W, Bayer AG, Leverkusen) bevorzugt sind.

Weiterhin sind als Polyisocyanate A) im Sinne der Erfindung solche freie Isocyanat-gruppen enthaltenden Polymere auf Polyurethan-, Polyester- und/oder Polyacrylat-Basis sowie gegebenenfalls deren Gemische geeignet, bei denen nur ein Teil der freien Isocyanatgruppen mit Blockierungsmitteln umgesetzt wird, während der restliche Teil mit einem Überschuss an Hydroxylgruppen enthaltenden Polyestern, Polyurethanen und/oder Polyacrylaten sowie gegebenenfalls deren Gemischen umgesetzt wird, so dass ein freie Hydroxygruppen enthaltendes Polymer entsteht, das beim Erhitzen auf geeignete Einbrenntemperaturen ohne Zugabe weiterer Komponenten mit Isocyanatgruppen reaktionsfähigen Gruppen vernetzt (selbstvernetzende Einkomponenten-Einbrennsysteme).

Es können alle genannten Polyisocyanate auch als beliebige Gemische untereinander oder auch mit anderen Vernetzern wie mit Melaminharzen zur Herstellung von Lacken, Farben und anderen Formulierungen eingesetzt werden.

Als Blockierungsmittel B) kommen N-H oder O-H funktionale Verbindungen in Betracht, die mit Isocyanaten abreagieren und bei geeigneter Temperatur eine Vernetzungsreaktion mit einer weiteren N-H oder O-H funktionalen Verbindung gestatten. Beispiele für geeignete Blockierungsmittel sind Dimethylpyrazol, Diisopropylamin, tert.-Butylbenzylamin, Butanonoxim, -Caprolactam, Ethoxyethanol, Isopropoxyethanol und andere Alkohole wie Carbitolen. Weiterhin können sekundäre Amine wie z.B. Dibutylamin oder andere Oxime wie z.B. Cyclohexanonoxim oder auch Acetonoxim eingesetzt werden. Eine Übersicht prinzipiell geeigneter Blockierungsmittel findet sich z.B. bei Wicks et al. in Progress in Organic Coatings 1975, 3, S. 73-79, 1981, 9, S. 3-28 und 1999, 36, S. 148-172. Bevorzugt ist die Verwendung von 3,5-Dimethylpyrazol, Diisopropylamin, tert.-Butylbenzylamin, Butanonoxim sowie Ethoxyethanol.

Das Verhältnis von Isocyanatgruppen zum Blockierungsmittel beträgt im Regelfall 1:1, kann aber auch einen Wert von 0,5:1 bis 2:1 annehmen. Bevorzugt ist ein Verhältnis von 0,9:1 bis 1,1:1, besonders bevorzugt von 0,95:1 bis 1:1.

Die Herstellung der blockierten Polyisocyanate (a) kann nach an sich bekannten Methoden erfolgen. Beispielsweise können ein oder mehrere Polyisocyanate vorgelegt und das Blockierungsmittel (beispielsweise während etwa 10 Min.) unter Rühren zudosiert werden. Es wird so lange gerührt, bis kein freies Isocyanat mehr nachweisbar ist. Es ist auch möglich, ein oder mehrere Polyisocyanate mit einem Gemisch aus zwei oder mehreren (gegebenenfalls auch nicht erfindungsgemäßen) Blockierungsmitteln zu blockieren. Die Herstellung der blockierten Polyisocyanate kann selbstverständlich auch in Lösungsmitteln erfolgen. Diese können entweder bei den weiteren Herstellschritten wieder abdestilliert werden oder aber sie verbleiben im Produkt.

Eine weitere Möglichkeit zur Herstellung der erfindungsgemäß eingesetzten blockierten Polyisocyanate (a) besteht darin, dass sie nach an sich bekanntem Verfahren ionisch, nichtionisch oder nach beiden Methoden hydrophiliert und nach Zugabe von Wasser in diesem gelöst oder dispergiert werden. Bei der Herstellung der Polyisocyanate können auch Katalysatoren, Colöser und andere Hilfsmittel und Additive verwendet werden. Die Herstellung der wässrigen Einkomponenten-Einbrennsysteme kann auch so erfolgen, dass nicht oder nur teilweise blockierte Polyisocyanate mit hydrophile Gruppen enthaltenden Polyestern, Polyacrylaten, Polyacrylat- und Polyurethan-modifizierten Polyestern vermischt und anschließend in eine Dispersion überführt werden.

Als weitere Aufbaukomponenten C geeignet sind ionische oder potentiell ionische Verbindungen C1) und/oder als nichtionische Hydrophilierungsmittel Verbindungen C2. Ionische oder potentiell ionische Verbindungen C1 sind z.B. Mono- und Dihydroxycarbonsäuren, Mono- und Diaminocarbonsäuren, Mono- und Dihydroxysulfonsäuren, Mono- und Diaminosulfonsäuren sowie Mono - und Dihydroxyphosphonsäuren bzw. Mono- und Diaminophosphonsäuren und ihre Salze wie Dimethylolpropionsäure, Hydroxypivalinsäure, N-(2-Aminoethyl)-β-alanin, 2-(2-Amino-ethyl-amino)-ethansulfonsäure, Ethylendiamin-propyl- oder butylsulfonsäure, 1,2- oder 1,3-Propylendiamin-β-ethylsulfonsäure, Lysin, 3,5-Diaminobenzoesäure, das Hydrophilierungsmittel gemäß Beispiel 1 aus der EP-A 0 916 647 und deren Alkali- und/oder Ammoniumsalze; das Addukt von Natriumbisulfit an Buten-2-diol-1,4, Polyethersulfonat, das propoxylierte Addukt aus 2-Butendiol und NaHSO₃ (z.B. in der DE-A 2 446 440, Seite 5-9, Formel I-III) sowie in kationische Gruppen überführbare Bausteine wie N-Methyl-diethanolamin als hydrophile Aufbaukomponenten.

Bevorzugte ionische oder potentielle ionische Verbindungen C1 sind solche, die über Carboxy - oder Carboxylat- und/oder Sulfonatgruppen und/oder Ammoniumgruppen verfügen. Besonders bevorzugte ionische Verbindungen sind solche, die Carboxyl- und/oder Sulfonatgruppen als ionische oder potentiell ionische Gruppen enthalten, wie die Salze von N-(2-Aminoethyl)-β-alanin, 2-(2-Amino-ethylamino)-ethansulfonsäure, des Hydrophilierungsmittels gemäß Beispiel 1 aus EP-A 0 916 647 sowie der Dimethylolpropionsäure.

Als Aufbaukomponenten C3 können auch solche eingesetzt werden, die im folgenden als Verbindungen (b) beschrieben werden.

Die unter die beschriebenen Komponenten C1, C2 und C3 fallenden Hydroxy-Komponenten können Doppelbindungen enthalten, die z.B. aus langkettigen aliphatischen Carbonsäuren oder Fettalkoholen stammen können. Eine Funktionalisierung mit olefinischen Doppelbindungen ist beispielsweise durch den Einbau allylischer Gruppen oder von Acrylsäure oder Methacrylsäure sowie deren jeweiligen Estern möglich. Hiermit ergibt sich die Möglichkeit, diese Substanzen für eine anschliessende oxidative Vernetzung unter Verwendung von Siccativen (Co⁺³) in Gegenwart von Luftsauerstoff Verbindungen oder durch UV Bestrahlung für eine weitere Vernetzung zu nutzen.

Durch die Wechselwirkung bzw. die Reaktion der Komponenten (a) bis (e) werden nach Dispergieren in bzw. mit Wasser sogenannte PUR-Dispersionen erhalten, die ihrem Wesen nach wässrige 1K-PUR Lacksysteme sind. Diese PUR-Dispersionen können weiterhin nichtionisch hydrophilierend wirkende Verbindungen C2 wie z.B. Polyoxyalkylenether mit mindestens einer Hydroxy- oder Aminogruppe, enthalten. Diese Polyether enthalten einen Anteil von 30 Gew.-% bis 100 Gew.-% an Bausteinen, die vom Ethylenoxid abgeleitet sind. In Frage kommen linear aufgebaute Polyether einer Funktionalität zwischen 1 und 3, aber auch Verbindungen der allgemeinen Formel (VI), 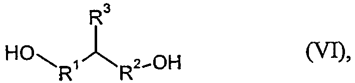 in welcher
- R¹ und R²: unabhängig voneinander jeweils einen zweiwertigen aliphatischen, cycloaliphatischen oder aromatischen Rest mit 1 bis 18 C-Atomen, die durch Sauerstoff und/oder Stickstoffatome unterbrochen sein können, bedeuten und
- R³: für einen nicht-hydroxyterminierten Polyester oder bevorzugt Polyether steht. Besonders bevorzugt steht R³ für einen alkoxyterminierten Polyethylenoxidrest.

Nichtionisch hydrophilierend wirkende Verbindungen, die als weitere Aufbaukomponente C2 eingesetzt werden, sind beispielsweise auch einwertige, im statistischen Mittel 5 bis 70, bevorzugt 7 bis 55 Ethylenoxideinheiten pro Molekül aufweisende Polyalkylenoxidpolyetheralkohole, wie sie in an sich bekannter Weise durch Alkoxylierung geeigneter Startermoleküle zugänglich sind (z.B. in Ullmanns Encyclopädie der technischen Chemie, 4.Auflage, Band 19, Verlag Chemie, Weinheim S. 31-38). Geeignete Startermoleküle sind beispielsweise gesättigte Monoalkohole wie Methanol, Ethanol, n-Propanol, Isopropanol, n-Butanol, Isobutanol, sec-Butanol, die isomeren Pentanole, Hexanole, Octanole und Nonanole, n-Decanol, n-Dodecanol, n-Tetradecanol, n-Hexadecanol, n-Octadecanol, Cyclohexanol, die isomeren Methylcyclohexanole oder Hydroxymethylcyclohexan, 3-Ethyl-3-hydroxymethyloxetan, oder Tetrahydrofurfurylalkohol; Diethylenglykolmonoalkylether wie beispielsweise Diethylenglykolmonobutylether; ungesättigte Alkohole wie Allylalkohol, 1,1-Dimethylallylalkohol oder Oleinalkohol, aromatische Alkohole wie Phenol, die isomeren Kresole oder Methoxyphenole, araliphatische Alkohole wie Benzylalkohol, Anisalkohol oder Zimtalkohol; sekundäre Monoamine wie Dimethylamin, Diethylamin, Dipropylamin, Diisopropylamin, Dibutylamin, Bis-(2-ethylhexyl)-amin, N-Methyl- und N-Ethylcyclohexylamin oder Dicyclohexylamin sowie heterocyclische sekundäre Amine wie Morpholin, Pyrrolidin, Piperidin oder 1H-Pyrazol.

Bevorzugte Startermoleküle sind gesättigte Monoalkohole sowie Diethylenglykol-monoalkylether. Besonders bevorzugt wird Diethylenglykolmonobutyl- oder methylether als Startermolekül verwendet.

Für die Alkoxylierungsreaktion geeignete Alkylenoxide sind insbesondere Ethylenoxid und Propylenoxid, die in beliebiger Reihenfolge oder auch im Gemisch bei der Alkoxylierungsreaktion eingesetzt werden können.

Bei den Polyalkylenoxidpolyetheralkoholen handelt es sich entweder um reine Polyethylenoxidpolyether oder gemischte Polyalkylenoxidpolyether, deren Alkylenoxideinheiten zu mindestens 30 mol-%, bevorzugt zu mindestens 40 mol-% aus Ethylenoxideinheiten bestehen. Bevorzugte nichtionische Verbindungen sind monofunktionelle gemischte Polyalkylenoxidpolyether, die mindestens 40 mol% Ethylenoxid- und maximal 60 mol% Propylenoxideinheiten aufweisen.

Zur Hydrophilierung der erfindungsgemäßen PUR-Dispersionen können auch Kombinationen von ionischen und nichtionischen Hydrophilierungsmitteln verwendet werden. Alternativ können auch kationische Hydrophilierungsmittel verwendet werden. Ist ersteres der Fall, so werden bevorzugt Kombinationen aus anionischen und nichtionischen Hydrophilierungsmitteln eingesetzt.

Die Polyisocyanate sind, wie oben beschrieben, entweder selbstvernetzende Polymere oder aber Vernetzer für beliebige Verbindungen mit gegenüber Polyisocyanaten reaktiven Gruppen (b). Als Verbindungen des genannten Typs (b), die auch als Gemische eingesetzt werden können, kommen in Betracht: Polyhydroxypolyester, Polyhydroxypolyether oder Hydroxylgruppen aufweisende Polymerisate, z.B. die an sich bekannten Polyhydroxypolyacrylate. Die Verbindungen weisen im allgemeinen eine Hydroxylzahl von 20 bis 200, vorzugsweise von 50 bis 130, bezogen auf 100 %ige Produkte, auf.

Bei den Polyhydroxylpolyacrylaten handelt es sich um an sich bekannte Mischpolymerisate von Styrol mit einfachen Estern der Acrylsäure und/oder Methacrylsäure, wobei zwecks Einführung der Hydroxylgruppen Hydroxyalkylester, wie beispielsweise die 2-Hydroxyethyl-, 2-Hydroxypropyl-, 2-,3- oder 4-Hydroxybutylester dieser Säuren mitverwendet werden.

Geeignete Polyetherpolyole sind die aus der Polyurethanchemie an sich bekannten Ethoxylierungs - und/oder Propoxylierungsprodukte geeigneter 2- bis 4-wertiger Startermoleküle wie z.B. Wasser, Ethylenglykol, Propandiol, Tri-methylolpropan, Glycerin und/oder Pentaerythrit.

Beispiele geeigneter Polyesterpolyole sind insbesondere die in der Polyurethanchemie an sich bekannten Umsetzungsprodukte von mehrwertigen Alkoholen, beispielsweise von Alkanpolyolen der soeben beispielhaft genannten Art mit überschüssigen Mengen Polycarbonsäuren bzw. Polycarbonsäureanhydriden, insbesondere Dicarbonsäuren bzw. Dicarbonsäureanhydriden. Geeignete Polycarbonsäuren bzw. Polycarbonsäureanhydride sind beispielsweise Adipinsäure, Phthalsäure, Isophthalsäure, Phthalsäureanhydrid, Tetrahydrophthalsäureanhydrid, Hexahydrophthalsäureanhydrid, Maleinsäure, Maleinsäureanhydrid, deren Diels-Alder-Addukte mit Cyclopentadien, Fumarsäure oder dimere bzw. trimere Fettsäuren. Bei der Herstellung der Polyesterpolyole können selbstverständlich beliebige Gemische der beispielhaft genannten mehrwertigen Alkohole oder beliebige Gemische der beispielhaft genannten Säuren bzw. Säureanhydride eingesetzt werden.

Die Herstellung der Polyesterpolyole erfolgt nach bekannten Methoden, wie z.B. in Houben-Weyl, Methoden der organischen Chemie, Band XIV/2, G. Thieme-Verlag, 1963, Seiten 1 bis 47 beschrieben sind. Die gegebenenfalls erforderliche hydrophile Modifizierung dieser Polyhydroxylverbindungen erfolgt nach an sich bekannten Methoden, wie sie beispielsweise in EP-A 0 157 291 oder EP-A 0 427 028 offenbart sind.

Es können auch Gemische dieser Polyole oder aber andere Kombinationen, Polyacrylat- und/oder Polyurethan-modifizierte Polyester eingesetzt werden.

Als Polyolkomponente (b) kommen in den erfindungsgemäßen Einkomponenten-Systemen auch 2-bis 6-wertige Alkohole und/oder deren Gemische in Betracht, die keine Ester-Gruppen aufweisen. Typische Beispiele sind Ethandiol-1,2, Propandiol-1,2 und 1,3, Butandiol-1,4, -1,2 oder -2,3, Hexandiol-1,6, 1,4-Dihydroxycyclohexan, Glycerin, Trimethylolethan, Trimethylolpropan, Pentaerythrit und Sorbit. Selbstverständlich können auch Alkohole mit ionischen oder in ionische Gruppen überführbare Gruppen eingesetzt werden. Bevorzugt sind beispielsweise 1,4- oder 1,3-Butandiol, 1,6-Hexandiol und/oder Trimethylolpropan.

Bei der Herstellung der erfindungsgemäßen Einkomponenten-Einbrennsysteme können als Komponente (b) auch Aminogruppen enthaltende Verbindungen wie Ethanolamin und dessen Derivate eingesetzt werden. Auch Diamine wie Hexamethylendiamin, Ethylendiamin, Isophorondiamin oder Hydrazin und/oder seine Derivate können eingesetzt werden.

Das Verhältnis der gegenüber den blockierten Isocyanaten reaktiven Gruppen zu den blockierten Isocyanaten kann in einem weiten Bereich variiert werden und wird im Regelfall 0,5:1 bis 2:1 betragen. Bevorzugt wird in einem Verhältnis von 1:1 bzw. 1,5:1 gearbeitet.

Die erfindungsgemäßen Einkomponenten Einbrennlacke enthalten zur Beschleunigung der Vernetzungsreaktion als Katalysatoren (c) organische und/oder anorganische Molybdänverbindungen.

Als Molybdän- und/oder Wolframverbindungen kommen alle bekannten Verbindungen des Molybdäns und/oder Wolframs in Frage, in denen diese eine Oxidationsstufe größer gleich + 4, beispielsweise + 5 und + 6, haben. Sie können sowohl löslich als auch partiell löslich oder aber unlöslich in dem zu katalysierenden Einkomponenten-Einbrennsystem sein. Sie können organischer oder aber anorganischer Natur sein; man kann auch Gemische verschiedener Molybdän- und/oder Wolframverbindungen einsetzen, ebenso Gemische der Molybdän- und/oder Wolframverbindungen mit anderen Katalysatoren wie Aminen und/oder Zinn- oder Wismutverbindungen.

Bevorzugt im Sinne der Erfindung sind Verbindungen des Molybdäns und/oder Wolframs in der Oxidationsstufe +6. Bevorzugt sind somit Derivate der Molybdän und/oder Wolframsäure. Dies sind beispiesweise Verbindungen aus der Gruppe bestehend aus Ammoniummolybdat, Lithiummolybdat, Natriummolybdat, Kaliummolybdat, Rubidiummolybdat, Cäsiummolybdat, Ammoniumparamolybdat (NH₄)₆Mo₇O₂₄·4H₂O Molybdänyl-bis-acetylacetonat MoO₂(C₅H₇O₅)₂, Molybdändioxidtetramethylheptadionat MoO₂(TMHD)₂, Molybdänalkoholate aus 1,2-, 1,3- oder 1,4-Diolen wie Ethylenglykol, Propylenglykol oder 1,4-Butandiol, Molybdänsäure, Tetraethylammoniummolybdat und Natriumwolframat.

Diese sind insbesondere Ammonium-, Lithium-, Natrium-, Kaliummolybdat- und -wolframat, Ammoniumparamolybdat (NH₄)₆Mo₇O₂₄· 4 H₂O, Molybdänyl-bis-acetylacetonat MoO₂(C₅H₇O₅)₂, Molybdän-bis-tetramethylheptadionat MoO₂(TMHD)₂, Molybdänalkoholate aus 1,2-, 1,3- oder 1,4-Diolen wie Ethylenglykol, Propylenglykol oder 1,4-Butandiol sowie Molybdänsäure.

Außer den oben genannten Verbindungen kann es sich dabei um Komplexe mit Alkoholen, Phenolen, Zuckern, organischen Säuren, (Poly)ethern usw. handeln. Besonders bevorzugt sind Lithium- und Natriummolybdat.

Die Molybdän- und/oder Wolframverbindungen werden in Mengen von 0,01 bis 5 Gew.-%, bevorzugt 0,1 bis 2 Gew.%, besonders bevorzugt 0,2 bis 1 Gew.-%, bezogen auf die Summe der Komponenten (a), (b) und (e), zugegeben. Die Zugabe kann zu beliebiger Komponente (a), (b), (d) oder (e) oder deren Gemischen erfolgen und zwar sowohl während der Herstellung als nachträglich zu der jeweiligen Komponente oder zum fertigen Lack. Bevorzugt ist die Zugabe während der Herstellung entweder der Komponente (a) oder (b) oder deren Gemische. In wässrigen Systemen erfolgt die Zugabe der erfindungsgemäßen Molybdän- und/oder Wolframverbindungen zu den jeweiligen Komponenten besonders bevorzugt vor der Zugabe des Dispergierwassers. Die erfindungsgemäßen Molybdän- und/oder Wolframverbindungen können als feingemahlener Feststoff, als Suspension in beliebigen Flüssigkeiten oder als Lösung zugegeben werden.

Die erfindungsgemäßen Einkomponenten Einbrennsysteme enthalten als Lösungsmittel (d) Wasser und/oder organische Lösemittel oder deren Gemische.

Als organische Lösungsmittel können alle bekannten Lösemittel verwendet werden. Bevorzugt sind die in der Lackindustrie verwendeten Lösemittel wie Xylol, Butylacetat, Ethylacetat, Butylglykolacetat, Methoxypropylacetat, Kohlenwasserstoffe wie Solvesso 100^{®} (Exxon Chemicals), N-Methylpyrrolidon.

Außer den blockierten Polyisocyanaten (a) und Polyolen (b) können den Formulierungen üblichen Zusatzstoffe und andere Hilfsmittel (e) (z.B. Pigmente, Füllstoffe, Verlaufsmittel, Entschäumer, Katalysatoren) und gegebenenfalls auch weitere von (c) verschiedene Katalysatoren zugesetzt werden.

Die Herstellung der Lacke, Farben und anderen Formulierungen aus den erfindungsgemäßen Einkomponenten-Einbrennsystemen erfolgt nach an sich bekannten Methoden. Unabhängig von der gewählten Herstellmethode enthalten die erfindungsgemäßen Einkomponenten Einbrennsysteme die vorstehend beschriebenen Einzelkomponenten (a) bis (e), wobei die Mengen von (a) + (b) von 20 bis 89,9 Gew.-Teile, (c) von 0,01 bis 5 Gew.-Teile, die Menge an (d) von 10 bis 75 Gew.-Teile und an (e) 0 bis 10 Gewichtsteile betragen, mit der Maßgabe, dass die Summe der Gewiclitsteile der Einzelkomponenten (a) bis (e) 100 beträgt.

Bevorzugt enthalten die erfindungsgemäßen Einkomponenten-Einbrennsysteme die vorstehend beschriebenen Einzelkomponenten (a) bis (e) mit der Maßgabe, dass sich zusammen eine Summe von 100 Gew.-Teilen ergibt, wobei die Mengen von (a) + (b) 30 bis 69,9 Gew.-Teile, (c) von 0,01 bis 2 Gew.-Teile, die Menge an (d) von 30 bis 70 Gew.-Teile und (e) von 0 bis 8 Gewichtsteile betragen.

Die erfindungsgemäßen Einkomponenten-Einbrennsysteme werden zur Herstellung von Einbrennlacken, z.B. für die Industrielackierung und bei der Automobilerstlackierung verwendet. Diese Einbrennlacke können z.B. Grundierungen, Füller sowie Decklacke sein. Die Einbrennlacke können Pigmente enthalten oder reine Decklacke sein. Hierzu können die erfindungsgemäßen Überzugsmittel durch Rakeln, Tauchen, Spritzauftrag wie Druckluft- oder Airless-Spritzen, sowie durch elektrostatischen Auftrag, beispielsweise Hochrotationsglockenauftrag, aufgetragen werden. Die Trockenfilm-Schichtdicke kann beispielsweise bei 10-120 µm liegen. Das Aushärten der getrockneten Filme erfolgt durch Einbrennen in Temperaturbereichen von 90-160°C, bevorzugt 110-140°C, besonders bevorzugt bei 120-130°C.

Die mit aus Zubereitungen auf Basis der erfindungsgemäßen Einkomponenten-Einbrennsysteme erhältlichen Beschichtungen beschichteten Substrate sind ebenfalls Gegenstand der vorliegenden Erfindung.

Die nachfolgenden Beispiele erläutern die Erfindung näher.

### Beispiele

In den folgenden Beispielen beziehen sich alle Prozentangaben auf das Gewicht.

### Beispiele 1 bis 4:

Es wurden Klarlacke nachfolgender Zusammensetzung durch intensives Vermischen der in Tabelle 1 aufgeführten Komponenten hergestellt. Das Äquivalentverhältnis von blockierten Isocyanat-gruppen zu OH-Gruppen beträgt 1:1.

**Tabelle 1: Klarlacke**

| **Komponente** | | |
|---|---|---|
| (a) | Desmodur^{®} VP LS 2253¹⁾Bayer AG Leverkusen | 29,5 Gew.-% |
| (b) | Desmophen^{®} A 870²), 70%ig in Butylacetat | 41,8 Gew.-% |
| (e) | Baysilone^{®} OL 17,10%ig in Xylol, Borchers GmbH, Monheim | 0,5 Gew.-% |
| (e) | Modaflow^{®}, 1%ig in Xylol | 0,5 Gew.-% |
| (e) | Tinuvin^{®} 292, 10%ig in Xylol, Ciba, Basel | 5,2 Gew.-% |
| (e) | Tinuvin^{®} 1130, 10%ig in Xylol, Ciba, Basel | 10,3 Gew.-% |
| (d) | 1-Methoxypropylacetat-2/Solventnaphtha 100 (1:1) | 12,2 Gew.-% |

| | | |
|---|---|---|
| 1) Blockierungsmittel: 3,5-Dimethylpyrazol. Es handelt sich um ein Hexamethylendiisocyanat Trimer, 75 Gew.-% in MPA/SN 100 (8:17), block. NCO-Gehalt 10,5 mol-% 2) Polyacrylat-Polyol, 70Gew.-%ig in Butylacetat, OH-Gehalt ca. 3 Gew.-%. | | |

Zu diesen Lacken wurden verschiedene Molybdänverbindungen zugemischt und die Lacke anschließend auf Glasplatten gespritzt und darin 30 Minuten bei 140°C eingebrannt. Als Vergleich ist der Katalysator DBTL bzw. ein nicht katalysiertes System mit untersucht worden. Die Eigenschaften der erhaltenen Filme sind in Tabelle 2 aufgeführt:

**Tabelle 2: Anwendungstechnische Tests und Vergleichsbeispiele**

| **Beispiel Nr.** | 1 | 2 | 3 (Vergleich) | 4 (Vergleich) |
|---|---|---|---|---|
| **Katalysator** | Molybdänylacetylacetonat | MoO₂(TMHD)₂ | DBTL | ohne |
| **Menge Katalysator (fest/fest) (%)** | 0,50 | 0,50 | 0,50 | - |
| **Einbrennbedingungen** | 30', 140°C | 30', 140°C | 30', 140°C | 30', 140°C |
| **Visuelle Beurteilung des Lackfilmes** | i.O. | i.O. | i.O. | i.O. |
| **Pendeldämpfung nach König (Schwingungen)** | 140 | 148 | 137 | 101 |
| **(s)** | 196 | 207 | 192 | 141 |
| **Lösemittelbeständigkeit** (X/MPA/EA/Ac) (Note)¹⁾ | | | | |
| **1 Min.** | 0012 | 0023 | 1123 | 2244 |
| **5 Min.** | 2124 | 2234 | 2244 | 3344 |

| | | | | |
|---|---|---|---|---|
| ¹⁾ Bewertung: 0 - gut; 5 - schlecht; TMHD = Tetramethylheptadionat; Erläuterung zum Lösungsmitteltest: X = Xylol/MPA = Methoxypropylacetat/EA = Ethylacetat, Essigsäureethylester/Ac = Aceton | | | | |

Man erkennt, dass die erfindungsgemäßen Katalysatoren eine deutlich höhere Reaktivität aufweisen als der Stand der Technik (DBTL), was sich in einer verbesserten Lösemittelbeständigkeit bemerkbar macht.

### Beispiele 5 bis 8

Es wurden Klarlacke nachfolgender Zusammensetzung durch intensives Vermischen der in Tabelle 3 aufgeführten Komponenten hergestellt:

**Tabelle 3: Klarlacke**

| **Komponente** | | |
|---|---|---|
| (a) | Desmodur^{®} BL 3175¹⁾,Bayer AG Leverkusen | 29,1 Gew.-% |
| (b) | Desmophen^{®} A 870, 70%ig in Butylacetat | 42,5 Gew.-% |
| (e) | Baysilone^{®} OL 17, 10%ig in Xylol, Borchers GmbH, Monheim | 0,5 Gew.-% |
| (e) | Modaflow^{®}, 1%ig in Xylol | 0,5 Gew.-% |
| (e) | Tinuvin^{®} 292, 10%ig in Xylol, Ciba, Basel | 5,1 Gew.-% |
| (e) | Tinuvin^{®} 1130, 10%ig in Xylol, Ciba, Basel | 10,3 Gew.-% |
| (d) | 1-Methoxypropylacetat-2/Solventnaphtha 100 (1:1) | 12,0 Gew.-% |

| | | |
|---|---|---|
| ¹⁾ Blockierungsmittel: Butanonoxim. Es handelt sich um ein Hexamethylendiisöcyanat Trimeres, ca. 75 Gew.-%ig in Solventnaphtha 100, Blockierter NCO-Gehalt 11, mol-%. Desmophen^{®} A 870: Polyacrylat-Polyol, 70 Gew.-%ig in Butylacetat, OH-Gehalt 3 Gew.-%. | | |

Zu diesen Lacken wurden unterschiedliche Molybdänverbindungen zugemischt und die Lacke anschließend auf Glasplatten gespritzt und dann 30 Minuten bei 140°C eingebrannt. Als Vergleich diente wiederum ein Lack, der mit DBTL katalysiert war sowie ein unkatalysierter Lack. Die Eigenschaften der erhaltenen Filme sind in Tabelle 4 aufgeführt:

**Tabelle 4: Anwendungstechnische Tests und Vergleichsbeispiele**

| **Beispiel Nr.** | **5** | **6** | **7** (Vergleich) | **8** (Vergleich) |
|---|---|---|---|---|
| **Katalysator** | Molybdänylacetylacetonat | MoO₂(TMHD)₂ | DBTL | ohne |
| **Menge Katalysator (fest/fest) (%)** | 0,50 | 0,50 | 0,50 | - |
| **Einbrennbedingungen** | 30', 140°C | 30', 140°C | 30', 140°C | 30', 140°C |
| **Visuelle Beurteilung des Lackfilmes** | i.O. | i.O. | i.O. | i.O. |
| **Pendeldämpfung nach König (Schwingungen) (s)** | 141 | 143 | 125 | 75 |
| | 197 | 200 | 175 | 105 |
| **Lösemittelbeständigkeit (X/MPA/EA/Ac) (Note)¹⁾** | | | | |
| **1 Min.** | 1022 | 0123 | 2234 | 3344 |
| **5 Min.** | 2234 | 2334 | 3344 | 4444 |

| | | | | |
|---|---|---|---|---|
| ¹⁾ Bewertung: 0 - gut; 5 - schlecht; TMHD = Tetramethylheptadionat. Erläuterung zum Lösungsmitteltest: X = Xylol/MPA = Methoxypropylacetat/EA = Ethylacetat, Essigsäureethylester/Ac = Aceton | | | | |

Man erkennt, dass durch Zusatz des Molybdän haltigen Katalysators verglichen mit dem Standard DBTL eine bessere Lösungsmittelbeständigkeit beim Einbrennen bei 140°C erreicht werden kann.

### Vorschrift zur Herstellung des wässrigen Selbstvernetzers für Beispiel 11-12 (Blockierungsmittel tert.Butyl-benzylamin/BEBA)

26,8 g (0,4 mol) Dimethylolpropionsäure, gelöst in 77,84 g N-Methylpyrrolidon, wurden bei 80°C zu 104,8 g (0,8 mol) Bis-(4,4'-isocyanatocyclohexyl)methan (Desmodur^{®} W, Bayer AG) zugegeben. Dann wurden 94,0 g (0,72 mol) Desmodur^{®} W, 112,3 g (0,345 mol) eines linearen Polycaprolactonpolyesters, 11,25 g (0,01 mol) eines monofunktionellen Polyethers mittleren Molgewichts von 2250, 6,70 g (0,1 mol) Trimethylolpropan und 4,50 g (0,1 mol) 1,4-Butandiol zugegeben und das Reaktionsgemisch bei 80°C sieben Stunden gerührt, bis ein Gehalt an Isocyanatgruppen von 4,66% (berechnet 4,79%) erreicht wurde. Dann wurde auf 70°C abgekühlt und bei dieser Temperatur innerhalb von 60 Minuten 65,31 g (0,4 mol) tert.Butyl-benzylamin zugegeben. Danach wurde 30 Minuten nachgerührt; der NCO-Gehalt betrug 0,75% (berechnet 0,83%). Anschließend wurden 230,0 g (0,575 Val OH) eines verzweigten Polyesters (Desmophen^{®} 670, 4,25 Gew.-% OH-Gruppen, Bayer AG) zugegeben und bei 70°C weitere 2 Stunden gerührt, bis keine freien NCO Gruppen mehr vorlagen. Dann wurden 17,83 g (0,20 mol) N-Dimethylethanolamin zugegeben und 10 Minuten nachgerührt. Danach wurden unter starkem Rühren 880,3 g 70°C warmes entionisiertes Wasser zugegeben, 1 Stunde bei 70°C nachgerührt und anschließend unter Rühren auf Raumtemperatur abgekühlt. Die erhaltene Dispersion besaß nachfolgende Eigenschaften:

| | |
|---|---|
| Feststoffgehalt: | 40 % |
| Viskosität (23°C, Rotationsviskosimeter): | 1100 mPas |
| Partikelgröße (LKS): | 52 nm |

Die auf diese Art und Weise erhaltene Dispersion wurde in den Beispielen 11 und 12 in Tabelle 5 eingesetzt. Die Herstellvorschriften für die Beispiele 9 bis 10 finden sich untenstehend. Die Katalysatoren wurden jeweils vor Disperigieren des Harzes in Wasser zugesetzt.

Aus den Dispersionen gemäß Beispielen 9 bis 12 wurden nach Zugabe von Verlaufsmittel Additol^{®} 395 (1,8 %, fest/fest) und Einstellung der Viskosität auf etwa 35 s (Auslaufbecher DIN 4) mit entionisiertem Wasser Klarlacke hergestellt und auf Glasplatten aufgespritzt. Die erhaltenen Filme wurden nach verschiedenen Methoden getestet und mit Filmen, die ohne Einsatz der erfindungsgemäßen Katalysatoren hergestellt wurden, verglichen. Die Ergebnisse sind in der Tabelle 5 aufgeführt.

Additol^{®} XW 395 ist ein Verlauf- Benetzungs- und Antiausschwimmittel für wasserverdünnbare Lacksysteme. Es enthält 58 Gew.-% Wirksubstanz. Hersteller: Vianova Resins AG

**Tabelle 5: Einbrenntemperaturen von wässrigen Selbstvernetzern in Gegenwart von Molybdänkatalysatoren - Anwendungstests**

| **Beispiel Nr.** | **9*** | **10** | **11*** | **12** | **12a** |
|---|---|---|---|---|---|
| (mit* sind Vergleichs- beispiele gekennzeichet) | DIPA block. | DIPA block. + Lithiummolybdat (0,75 %) | BEBA block. | BEBA block. + Lithiummolybdat (0,75 %) | BEBA block. + Natriumumwolframat (1%) |
| **Klarlack: Bindemittel + Additol XW 395 (1,8 %) + H₂O** | | | | | |
| **Pendelhärte** | | | | | |
| **30' 120°C** | 28s | 42s | 43s | 59s | 43s |
| **30' 130°C** | 36s | 48s | 50s | 62s | 53 |
| **30' 140°C** | 53s | 59s | 53s | 56s | 54 |
| Lösemittelbeständigkeit (X/MPA/EA/Ac) (Note)¹⁾ | | | | | |
| **nach 1 Minute** | | | | | |
| **30' 120°C** | 5555 | 3333 | 1144 | 1133 | 1134 |
| **30' 130°C** | 3455 | 1133 | 1134 | 1133 | 1133 |
| **30' 140°C** | 1113 | 1113 | 1113 | 1112 | 1113 |

| | | | | | |
|---|---|---|---|---|---|
| Bewertung: 0 - gut; 5 - schlecht. Erläuterung zum Lösungsmitteltest: X = Xylol/MPA = Methoxypropylacetat/EA = Ethylacetat, Essigsäureethylester/Ac = Aceton | | | | | |

### Beispiele 9 bis 10, 13 bis 17

### Herstellung des Selbstvernetzers für Beispiele 9-10, 13-17, 18-21, 22-23 und 24 (Vergleich)

Zu 789,8 g (3,71 Val NCO) eines aliphatischen Polyisocyanats (Desmodur^{®} N 3300, Bayer AG, D-Leverkusen) wurden 336,7 g N-Methylpyrrolidon zugegeben. Unter Rühren wurden 374,9 g (3,71 Val) Diisopropylamin innerhalb von 60 Minuten so zugegeben, dass die Temperatur 70°C nicht überstieg. Es wurde 60 Minuten bei 70°C nachgerührt; danach waren IR-spektroskopisch keine Isocyanatgruppen mehr nachweisbar. Bei 70°C wurden 2311 g (5,29 Val Hydroxylgruppen) eines Polyesterpolyacrylats aus einem Polyesterpolyol aus 1,6-Hexandiol, Trimethylolpropan, Erdnussölfettsäure, Maleinsäureanhydrid und Phthalsäureanhydrid und einer OH-Zahl von 136, gepfropft mit einem Gemisch aus Butylacrylat, Methylinethacrylat und Hydroxypropylmethacrylat, zugegeben und 20 Minuten gerührt. Dann wurden 115,5 g (1,296 Val) Dimethylethanolamin zugegeben und 10 Minuten nachgerührt.

Zu je 614 g dieses Reaktionsgemisches wurden bei 70°C die in Tabelle 6 angegebenen Mengen fein pulverisiertes Lithiummolybdat zugegeben und 30 Minuten nachgerührt. Danach wurden jeweils 581 g 70°C warmes entionisiertes Wasser unter starkem Rühren zugegeben, 60 Minuten nachgerührt und unter Rühren abkühlen gelassen. Die erhaltenen Dispersionen besaßen einen Feststoffgehalt von 45 Gew.-% und weitere nachfolgende Eigenschaften:

**Tabelle 6:**

| **Beispiel-Nr.** | **Katalysator** | **Katalysatorzugabe (g) (bzw. % fest/fest)** | **Viskosität (mPas)** | **Partikelgröße (LKS) (nm)** | **pH-Wert** |
|---|---|---|---|---|---|
| **13** | Lithiummolybdat | 1,62 (0,3) | 410 | 128 | 9,3 |
| **14** | Lithiummolybdat | 2,16 (0,4) | 390 | 124 | 9,2 |
| **15** | Lithiummolybdat | 2,70 (0,5) | 380 | 115 | 9,3 |
| **16** | Lithiummolybdat | 4,06 (0,75) | 590 | 121 | 9,3 |
| **17** | Lithiummolybdat | 5,41 (1,00) | 4000 | 250 | 9,4 |

### Beispiele 18 bis 21

Es wurde wie in Beispielen 13 bis 17 beschrieben gearbeitet, jedoch wurden die in Tabelle 7 aufgeführten Katalysatoren eingesetzt. Die erhaltenen Dispersionen besaßen nachfolgende Eigenschaften:

**Tabelle 7**

| **Beispiel-Nr.** | **Katalysator** | **Dosierung Katalysator (% fest/fest)** | **Viskosität (mPas)** | **Partikelgröße (LKS) (nm)** | **pH-Wert** |
|---|---|---|---|---|---|
| **18** | Natriummolybdat | 0,26 | 320 | 113 | 9,1 |
| **19** | Natriummolybdat | 1,00 | 1800 | 108 | 9,3 |
| **20** | Kaliummolybdat | 0,60 | 350 | 137 | 9,2 |
| **21** | Tetrabutylammoniummolybdat | 0,60 | 260 | 115 | 9,1 |

### Beispiele 22 und 23

Es wurde gearbeitet wie in Beispielen 17 und 19 beschrieben, jedoch wurden die Katalysatoren zur fertigen Dispersion zugegeben. Die erhaltenen Dispersionen besaßen nachfolgende Eigenschaften:

**Tabelle 8**

| **Beispiel-Nr.** | **Viskosität** | **Katalysator** | **Partikelgröße (LKS, nm)** | **pH-Wert** |
|---|---|---|---|---|
| **22** | 4500 | Lithiummolybdat | 130 | 9,4 |
| **23** | 2000 | Natriummolybdat | 110 | 9,3 |

### Beispiel 24 (Vergleichsbeispiel)

Es wurde wie in Beispielen 13 bis 23 gearbeitet, jedoch wurde keine Molybdänverbindung zugegeben. Die erhaltene Dispersion besaß nachfolgende Eigenschaften:

| | |
|---|---|
| Feststoffgehalt: | 45 Gew.-% |
| Viskosität (23°C) | 390 mPas |
| Partikelgröße (LKS) | 133 nm |
| pH-Wert | 9,2 |

### Beispiele 25 bis 36

Aus den Dispersionen gemäß Beispielen 13 bis 23 wurden nach Zugabe von Verlaufsmittel Additol^{®} 395 (1,8 %, fest/fest) und Einstellung der Viskosität auf etwa 35 s (Auslaufbecher DIN 4) mit entionisiertem Wasser Klarlacke hergestellt und auf Glasplatten aufgespritzt. Die erhaltenen Filme wurden nach verschiedenen Methoden getestet und mit Filmen, die ohne Einsatz der erfindungsgemäßen Katalysatoren hergestellt wurden, verglichen. Die Ergebnisse sind in den Tabellen 9 und 10 aufgeführt:

**Tabelle 9: Anwendungstechnische Tests an Klarlacken**

| **Klarlack-Beispiel Nr.** | **26** | **27** | **28** | **29** | **30** | **25** | **38** |
|---|---|---|---|---|---|---|---|
| | **Produkt aus Dispersion-Beispiel-Nr.** | | | | | | |
| **Beispiel Nr.** | **13** | **14** | **15** | **16** | **17** | **24 (Vergleich)** | **37 (Vergleich)** |
| **Auslaufzeit Lack** | | | | | | | |
| **O-Wert** | 39s | 35s | 38s | 39s | 38 | 32s | 31s |
| **Nach 11d 40°C** | 47s | 48s | 64s | 63s | 43s | 27s | 26s |
| **Pendelhärte** | | | | | | | |
| **30' 120°C** | 53s | 60s | 70s | 76s | 84s | 24s | 49s |
| **30' 130°C** | 76s | 70s | 85s | 87s | 115s | 29s | 64s |
| **30' 140°C** | 95s | 97s | 102s | 108s | 125s | 67s | 113s |
| **Anlösbarkeit 1'** | | | | | | | |
| **30' 120°C** | 3344 | 3344 | 3344 | 3344 | 2244 | 4444 | 3444 |
| **30' 130°C** | 2244 | 1144 | 1144 | 1144 | 1144 | 3344 | 2344 |
| **30' 140°C** | 1134 | 1134 | 1144 | 1144 | 1144 | 1144 | 1144 |

| **Klarlackprüfung nach 11d Lagerung bei 40°C** | | | | | | | |
|---|---|---|---|---|---|---|---|
| **Pendelhärte** | | | | | | | |
| **30' 120°C** | 67s | 53s | 76s | 74s | 84s | 29s | 48s |
| **30' 130°C** | 80s | 60s | 80s | 91s | 95s | 32s | 62s |
| **30' 140°C** | 87s | 83s | 102s | 102s | 111s | 63s | 109s |
| **Lösemittelbeständigkeit (X/MPA/EA/Ac) (Note)¹⁾ nach 1'** | | | | | | | |
| **30' 120°C** | 1144 | 1144 | 1144 | 1144 | 2244 | 4444 | 2344 |
| **30' 130°C** | 1144 | 1144 | 1144 | 1144 | 1144 | 3344 | 2234 |
| **30' 140°C** | 1144 | 1144 | 1144 | 1144 | 1144 | 1144 | 1144 |

| | | | | | | | |
|---|---|---|---|---|---|---|---|
| Erläuterung zum Lösungsmitteltest: X = Xylol/MPA = Methoxypropylacetat/EA = Ethylacetat, Essigsäureethylester/Ac = Aceton | | | | | | | |

Man sieht, dass durch die Zugabe von Molybdatkatalysatoren zur Dispersion die Einbrenntemperatur bzw. die Lösungsmittelbeständigkeit verbessert werden kann. Die Verbesserung entspricht einer niedrigeren Einbrenntemperatur von ca. 20°C.

**Tabelle 10: Anwendungstechnische Tests an Klarlacken**

| **Klarlack-Beispiel Nr.** | **31** | **32** | **33** | **34** | **35** | **36** | **25** | **38** |
|---|---|---|---|---|---|---|---|---|
| **Produkt aus Dispersion-Beispiel-Nr.** | | | | | | | | |
| **Eigenschaft** | **18** | **19** | **20** | **21** | **22** | **23** | **24 (Vergleich)** | **37 (Vergleich)** |
| **Auslaufzeit (DIN-Cup 4)** | | | | | | | | |
| **O-Wert** | 35s | 34s | 28s | 29s | 38s | 35s | 32s | 31s |
| **Nach 7d 40°C** | 27s | 28s | 26s | 28s | 46s | 27s | 27s | 26s |
| **Pendelhärte** | | | | | | | | |
| **30' 120°C** | 66s | 62s | 52s | 39s | 67s | 94s | 24s | 49s |
| **30' 130°C** | 91s | 115s | 92s | 48s | 92s | 123s | 29s | 64s |
| **30' 140°C** | 122s | 122s | 105s | 112s | 111s | 125s | 67s | 113s |
| **Lösemittelbeständigkeit (X/MPA/EA/Ac) (Note)¹⁾ nach 1'** | | | | | | | | |
| **30' 120°C** | 2344 | 3344 | 3344 | 3344 | 4344 | 2144 | 4444 | 3444 |
| **30' 130°C** | 2234 | 1244 | 2244 | 1244 | 1144 | 1144 | 3344 | 2344 |
| **30' 140°C** | 1144 | 1144 | 1144 | 1144 | 1144 | 1144 | 1144 | 1144 |

| **Klarlackprüfung nach 7d Lagerung bei 40°C** | | | | | | | | |
|---|---|---|---|---|---|---|---|---|
| **Pendelhärte** | | | | 53s | 69s | | | |
| **30' 120°C** | 85s | 62s | 67s | | | 84s | 29s | 48s |
| **30' 130°C** | 91s | 91s | 81s | 59s | 112s | 116s | 32s | 62s |
| **30' 140°C** | 108s | 106s | 106s | 106s | 98s | 132s | 63s | 109s |
| **Lösemittelbeständigkeit (X/MPA/EA/Ac) (Note)¹⁾ nach 1'** | | | | | | | | |
| **30' 120°C** | 4344 | 3344 | 3344 | 2244 | 2244 | 2244 | 4444 | 3444 |
| **30' 130°C** | 2244 | 2144 | 2244 | 2144 | 1144 | 1144 | 3344 | 2344 |
| **30' 140°C** | 2244 | 1144 | 1144 | 1144 | 1144 | 1144 | 1144 | 1144 |

| | | | | | | | | |
|---|---|---|---|---|---|---|---|---|
| Erläuterung zum Lösungsmitteltest: X = Xylol/MPA = Methoxypropylacetat/EA = Ethylacetat, Essigsäureethylester/Ac = Aceton | | | | | | | | |

Man sieht, dass durch die Zugabe von Molybdatkatalysatoren zur Dispersion die Einbrenntemperatur bzw. die Lösungsmittelbeständigkeit verbessert werden kann. Auch bei längerer Lagerung der Dispersionen bleicht dieser Effekt erhalten.

### Beispiel 37 (Vergleichsbeispiel)

Es wurde wie in Beispielen 13 bis 23 gearbeitet, jedoch wurden anstelle der Molybdänverbindung 1,0 g Dibutylzinndilaurat verwendet. Die erhaltene Dispersion besaß nachfolgende Eigenschaften:

| | |
|---|---|
| Feststoffgehalt: | 45 Gew.-% |
| Viskosität (23°C) | 990 mPas |
| Partikelgröße (LKS) | 138 nm |
| pH-Wert | 9,2 |

### Beispiele 39-43

Beispiele für blockierte Polyisocyanate, die mit Dimethylpyrazol oder Butanonoxim blockiert wurden und durch ein PES/PAC System (auf der Basis eines verzweigten Polyesters und eines hydroxyfunktionellen wasserdispergierbaren Acrylats) wasserdispergierbar sind. Bei dem eingesetzten blockierten Polyisocyanat handelt es sich um ein Hexamethylendiisocyanat Trimer, das mit 3,5-Dimethylpyrazol blockiert wurde (Desmodur^{®} VP LS 2253, Bayer AG) sowie um ein Hexamethylendiisocyanat Trimer, das mit Butanonoxim blockiert wurde (Desmodur^{®} BL 3175, Bayer AG). Diese blockierten Polyisocyanate wurde mit einem Polyester/Polyacrylatharz (siehe oben) versetzt und anschließend in Wasser dispergiert. Dabei wurde mit Dimethylethanolamin versetzt, 10 min rühren gelassen und dann Lithiummolybdat hinzugegeben. Man ließ zur besseren Einarbeitung noch nachrühren. Der Prozentsatz des verwendeten Katalysators ist jeweils aufgeführt.

**Tabelle 11: Anwendungstechnische Tests an Klarlacken**

| **Beispiel Nr.** | **39*** | **40** | **41** | **42*** | **43** |
|---|---|---|---|---|---|
| (mit * sind Vergleichs- beispiele gekennzeichnet) | PES/PAC/LS 2253 ohne Kat. | PES/PAC/LS 2253 + 0,75% Lithiummolvbdat | PES/PAC/LS 2253 + 0,26% Natriummolybdat | PES/PAC/BL 3175 ohne Kat. | PES/PAC/BL 3175+ 1% Lithiummolybdat |
| pH-Wert | | | | | |
| 0-Wert | 8,3 | 8,1 | 8,1 | 8,4 | 8,5 |
| n. 4 Wo. 40°C | | | | | |

| **Klarlack: Bindemittel + Additol^{®} XW 395 (1,8%) + H₂O** | | | | | |
|---|---|---|---|---|---|
| **Az (DIN-Cup 4)** | | | | | |
| **0-Wert** | 39s | 36s | 36s | 35s | 38s |
| **n. 7d 40°C** | 24s | 24s | 25s | 24s | 29s |
| **Pendelhärte** | | | | | |
| **sofort/n. 7d 40°C** | | | | | |
| **30' 120°C** | 24s/36s | 66s/78s | 43s/69s | 6s/7s | 7s/13s |
| **30' 130°C** | 38s/53s | 97s/98s | 62s/91s | 11s/18s | 27s/36s |
| **30' 140°C** | 126s/106s | 139s/108s | 118s/95s | 94s/45s | 127s/106s |
| **30' 150°C** | - | - | | 120s/73s | 147s/134s |
| Lösemittelbeständigkeit (X/MPA/EA/Ac) (Note)¹⁾ nach 1' | | | | | |
| **sofort/n. 7d 40°C** | | | | | |
| **30' 120°C** | 3344/4344 | 2144/1144 | 3344/4344 | 5555/5555 | 4455/4445 |
| **30' 130°C** | 1144/1144 | 1144/1144 | 2244/1144 | 4444/4444 | 2244/4345 |
| **30' 140°C** | 1144/1144 | 1144/1144 | 3244/1144 | 4344/2244 | 1144/1144 |
| **30' 150°C** | - | - | - | 1144/1144 | 1144/1144 |

| | | | | | |
|---|---|---|---|---|---|
| 0 - gut; 5 - schlecht; Az = Auslaufzeit. Erläuterung zum Lösungsmitteltest: X = Xylol/MPA = Methoxypropylacetat/EA = Ethylacetat, Essigsäureethylester/Ac = Aceton Additol^{®} XW 395 ist ein Verlauf- Benetzungs- und Antiausschwimmittel für wasserverdünnbare Lacksysteme. Es enthält ca. 58% Wirksubstanz. Hersteller: Vianova Resins AG Die Bestimmung der mittleren Teilchengrößen (angegeben ist das Zahlenmittel) der PUR- Dispersionen erfolgte mittels Laserkorrelations-Spektroskopie (Gerät: Malvern Zetasizer 1000, Malvern Instruments Ltd). | | | | | |

## Patentansprüche

1. Einkomponenten-Einbrennsysteme auf Polyurethanbasis, **dadurch gekennzeichnet, dass** sie eine oder mehrere organische und/oder anorganische Verbindungen des Molybdäns und/oder Wolframs enthalten, in welchen das Molybdän und oder Wolfram eine Oxidationsstufe von mindestens + 4 hat, ausgewählt aus der Gruppe bestehend aus Ammoniummolybdat, Lithiummolybdat, Natriummolybdat, Kaliummolybdat, Rubidiummolybdat, Cäsiummolybdat, Ammoniumparamolybdat (NH₄)₆Mo₇O₂₄·4H₂O, Molybdänyl-bis-acetylacetonat MoO₂(C₅H₇O₅)₂, Molybdändioxidtetramethylheptadionat MoO₂(TMHD)₂, Molybdänalkoholate aus 1,2-, 1,3- oder 1,4-Diolen wie Ethylenglykol, Propylenglykol oder 1,4-Butandiol, Molybdänsäure, Tetraethylammoniummolybdat, Natriumwolframat, Magnesiummolybdat, Calciummolybdat, Wolframsäure, Lithiumwolframat und Phosphorwolframsäure.

2. Systeme gemäß Anspruch 1, **dadurch gekennzeichnet, dass** es sich bei den Verbindungen des Molybdäns und/oder Wolframs um Verbindungen ausgewählt aus der Gruppe bestehend aus Ammoniummolybdat, Lithiummolybdat, Natriummolybdat, Kaliummolybdat, Rubidiummolybdat, Cäsiummolybdat, Ammoniumparamolybdat (NH₄)₆Mo₇O₂₄ 4H₂O Molybdänyl-bis-acetylacetonat MoO₂(C₅H₇O₅)₂, Molybdändioxidtetramethylheptadionat MoO₂(TMHD)₂, Molybdänalkoholate aus 1,2-, 1,3- oder 1,4-Diolen wie Ethylenglykol, Propylenglykol oder 1,4-Butandiol, Molybdänsäure, Tetraethylammoniummolybdat und Natriumwolframat handelt.

3. Einkomponenten-Einbrennsysteme auf Polyurethanbasis, **dadurch gekennzeichnet, dass** sie
(a) blockierte Polyisocyanate,
(b) Polymere mit gegenüber Polyisocyanaten reaktiven Gruppen,
(c) eine oder mehrere organische und/oder anorganische Verbindungen des Molybdäns und/oder Wolframs enthalten, in welchen das Molybdän und/oder Wolfram eine Oxidationsstufe von mindestens + 4 hat, ausgewählt aus der Gruppe bestehend aus Ammoniummolybdat, Lithiummolybdat, Natriummolybdat, Kaliummolybdat, Rubidiummolybdat, Cäsiummolybdat, Ammoniumparamolybdat (NH₄)₆Mo₇O₂₄ 4H₂O, Molybdänyl-bis-acetylacetonat MoO₂(C₅H₇O₅)₂, Molybdändioxidtetramethylheptadionat MoO₂(TMHD)₂, Molybdänalkoholate aus 1,2-, 1,3- oder 1,4-Diolen wie Ethylenglykol, Propylenglykol oder 1,4-Butandiol, Molybdänsäure, Tetraethylammoniummolybdat, Natriumwolframat, Magnesiummolybdat, Calciummolybdat, Wolframsäure, Lithiumwolframat und Phosphorwolframsäure,
(d) Wasser und/oder organische Lösemittel oder Lösemittelgemische und
(e) gegebenenfalls weitere Zusatzstoffe und Hilfsmittel
enthalten, wobei die Mengen an (a) + (b) 20 bis 89,9 Gew.-Teile, (c) 0,01 bis 5 Gew.-Teile, (d) 10 bis 70 Gew.-Teile und (e) 0 bis 10 Gew.-Teile betragen und die Summe der Gew.-Teile der Komponenten (a) bis (e) 100 beträgt.

4. Systeme gemäß Anspruch 3, **dadurch gekennzeichnet, dass** als blockierte Polyisocyanate (a) aliphatische Isocyanate verwendet werden.

5. Systeme gemäß Anspruch 3, **dadurch gekennzeichnet, dass** als blockierte Polyisocyanate (a) aromatische Isocyanate verwendet werden.

6. Systeme gemäß Anspruch 3, **dadurch gekennzeichnet, dass** als blockierte Polyisocyanate (a) solche auf Basis von Hexamethylendiisocyanat, Isophorondiisocyanat, 4,4'-Diisocyanatodicyclohexylmethan, deren Derivaten und/oder Gemischen eingesetzt werden.

7. Systeme gemäß Ansprüchen 3 bis 6, **dadurch gekennzeichnet, dass** die Polyisocyanate (a) hydrophiliert sind.

8. Systeme gemäß Ansprüchen 3 bis 7, **dadurch gekennzeichnet, dass** als Molybdän- und/oder Wolframverbindung (c) Salze der Molybdän- und/oder Wolframsäure oder Kondensationsprodukte derselben eingesetzt werden.

9. Systeme gemäß Ansprüchen 3 bis 7, **dadurch gekennzeichnet, dass** als Molybdän- und/oder Wolframverbindung (c) Ortho- und Metamolybdate und/oder -Wolframate des Lithiums, Natriums und Kaliums eingesetzt werden.

10. Verfahren zur Herstellung der Systeme gemäß Ansprüchen 3 bis 9, **dadurch gekennzeichnet, dass** die Komponente (c) in die Komponenten (a) und/oder (b) vor deren Dispergierung oder Auflösung in Komponente (d) eingebracht wird.

11. Verfahren zur Herstellung der Systeme gemäß Ansprüchen 3 bis 9, **dadurch gekennzeichnet, dass** die Komponente (c) in die Komponente (d) vor der Dispergierung oder Auflösung der Komponente (a) und/oder (b) in derselben eingebracht wird.

12. Verfahren zur Herstellung wässriger oder wasserdispergierbarer Systeme gemäß Ansprüchen 3 bis 9, **dadurch gekennzeichnet, dass** die Komponente (c) zu einer oder mehreren der Komponenten (a), (b), (d) und/oder (e) vor der Zugabe des Dispergierwassers zugegeben wird.

13. Verwendung der Systeme gemäß Ansprüchen 1 bis 9 zur Herstellung von Lacken, Farben und Klebstoffen.

14. Substrate beschichtet mit aus Systemen gemäß Ansprüchen 1 bis 9 erhältlichen Überzügen.

## Claims

1. Polyurethane-based one-component baking systems, **characterized in that** they comprise one or more organic and/or inorganic compounds of molybdenum and/or of tungsten in which the molybdenum and/or tungsten has an oxidation state of at least + 4, selected from the group consisting of ammonium molybdate, lithium molybdate, sodium molybdate, potassium molybdate, rubidium molybdate, caesium molybdate, ammonium paramolybdate (NH₄)6Mo₇O₂₄ · 4H₂O molybdenyl bisacetylacetonate MoO₂(C₅H₇O₅)₂, molybdenum dioxide tetramethylheptadionate MoO₂(TMHD)₂, molybdenum alkoxides formed from 1,2-, 1,3- or 1,4-diols such as ethylene glycol, propylene glycol or 1,4-butanediol, molybdic acid, tetraethylammonium molybdate, sodium tungstate, magnesium molybdate, calcium molybdate, tungstic acid, lithium tungstate and phosphotungstic acid.

2. Systems according to Claim 1, **characterized in that** the compounds of molybdenum and/or of tungsten are compounds selected from the group consisting of ammonium molybdate, lithium molybdate, sodium molybdate, potassium molybdate, rubidium molybdate, caesium molybdate, ammonium paramolybdate (NH₄)6Mo₇O₂₄ · 4H₂O molybdenyl bisacetylacetonate MoO₂(C₅H₇O₅)₂, molybdenum dioxide tetramethylheptadionate MoO₂(TMHD)₂, molybdenum alkoxides formed from 1,2-, 1,3- or 1,4-diols such as ethylene glycol, propylene glycol or 1,4-butanediol, molybdic acid, tetraethylammonium molybdate and sodium tungstate.

3. Polyurethane-based one-component baking systems, **characterized in that** they comprise
(a) blocked polyisocyanates,
(b) polymers having polyisocyanate-reactive groups,
(c) one or more organic and/or inorganic compounds of molybdenum and/or of tungsten in which the molybdenum and/or tungsten has an oxidation state of at least + 4, selected from the group consisting of ammonium molybdate, lithium molybdate, sodium molybdate, potassium molybdate, rubidium molybdate, caesium molybdate, ammonium paramolybdate (NH₄)6Mo₇O₂₄ · 4H₂O molybdenyl bisacetylacetonate MoO₂(C₅H₇O₅)₂, molybdenum dioxide tetramethylheptadionate MoO₂(TMHD)₂, molybdenum alkoxides formed from 1,2-, 1,3- or 1,4-diols such as ethylene glycol, propylene glycol or 1,4-butanediol, molybdic acid, tetraethylammonium molybdate, sodium tungstate, magnesium molybdate, calcium molybdate, tungstic acid, lithium tungstate and phosphotungstic acid,
(d) water and/or organic solvents or solvent mixtures and
(e) if desired, further additives and
auxiliaries,
the amounts of (a) + (b) being from 20 to 89.9 parts by weight, (c) from 0.01 to 5 parts by weight, (d) from 10 to 70 parts by weight and (e) from 0 to 10 parts by weight and the sum of the parts by weight of components (a) to (e) being 100.

4. Systems according to Claim 3, **characterized in that** aliphatic isocyanates are used as blocked polyisocyanates (a).

5. Systems according to Claim 3, **characterized in that** aromatic isocyanates are used as blocked polyisocyanates (a).

6. Systems according to Claim 3, **characterized in that** polyisocyanates based on hexamethylene diisocyanate, isophorone diisocyanate, 4,4'-diisocyanatodicyclohexylmethane, their derivatives and/or mixtures are used as blocked polyisocyanates (a).

7. Systems according to Claims 3 to 6, **characterized in that** the polyisocyanates (a) are hydrophilicized.

8. Systems according to Claims 3 to 7, **characterized in that** salts of molybdic and/or tungstic acid or condensation products thereof are used as molybdenum compound and/or tungsten compound (c).

9. Systems according to Claims 3 to 7, **characterized in that** ortho- and meta-molybdates and/or - tungstates of lithium, sodium and potassium are used as molybdenum compound and/or tungsten compound (c).

10. Process for preparing the systems according to Claims 3 to 9, **characterized in that** component (c) is introduced into components (a) and/or (b) prior to the dispersing or dissolution thereof in component (d).

11. Process for preparing the systems according to Claims 3 to 9, **characterized in that** component (c) is introduced into component (d) prior to the dispersing or dissolution of component (a) and/or (b) in the same.

12. Process for preparing aqueous or water-dispersible systems according to Claims 3 to 9, **characterized in that** component (c) is added to one or more of components (a), (b), (d) and/or (e) before the dispersing water is added.

13. Use of the systems according to Claims 1 to 9 for preparing paints, inks and adhesives.

14. Substrates coated with coatings obtainable from systems according to Claims 1 to 9.

## Revendications

1. Systèmes de thermolaquage monocomposants à base de polyuréthane, **caractérisés en ce que** qu'ils contiennent un ou plusieurs composés organiques et/ou composés inorganiques du molybdène et/ou du tungstène, dans lesquels le molybdène et/ou le tungstène a/ont un degré d'oxydation d'au moins +4, choisis dans le groupe constitué par le molybdate d'ammonium, le molybdate de lithium, le molybdate de sodium, le molybdate de potassium, le molybdate de rubidium, le molybdate de césium, le paramolybdate d'ammonium (NH₄)₆Mo₇O₂₄.4H₂O, le bis-acétylacétonate de molybdyle MoO₂(C₅H₇O₅)₂, le dioxyde de molybdène-tétraméthylheptadionate MoO₂(TMHD)₂, des molybdène-alcoolates de 1,2-, 1,3- ou 1,4-diols tels que l'éthylèneglycol, le propylèneglycol ou le 1,4-butanediol, l'acide molybdique, le molybdate de tétraéthylammonium, le tungstate de sodium, le molybdate de magnésium, le molybdate de calcium, l'acide tungstique, le tungstate de lithium et l'acide phosphotungstique.

2. Systèmes selon la revendication 1, **caractérisés en ce que** les composés du molybdène et/ou du tungstène consistent en des composés choisis dans le groupe constitué par le molybdate d'ammonium, le molybdate de lithium, le molybdate de sodium, le molybdate de potassium, le molybdate de rubidium, le molybdate de césium, le paramolybdate d'ammonium (NH₄)₆Mo₇O₂₄.4H₂O, le bis-acétylacétonate de molybdyle MoO₂(C₅H₇O₅)₂, le dioxyde de molybdène-tétraméthylheptadionate MoO₂(TMHD)₂, des molybdène-alcoolates de 1,2-, 1,3- ou 1,4-diols tels que l'éthylèneglycol, le propylèneglycol ou le 1,4-butanediol, l'acide molybdique, le molybdate de tétraéthylammonium et le tungstate de sodium.

3. Systèmes de thermolaquage monocomposants à base de polyuréthane, **caractérisés en ce que** qu'ils contiennent
(a) des polyisocyanates bloqués,
(b) des polymères comportant des groupes réactifs vis-à-vis de polyisocyanates,
(c) un ou plusieurs composés organiques et/ou composés inorganiques du molybdène et/ou du tungstène, dans lesquels le molybdène et/ou le tungstène a/ont un degré d'oxydation d'au moins +4, choisis dans le groupe constitué par le molybdate d'ammonium, le molybdate de lithium, le molybdate de sodium, le molybdate de potassium, le molybdate de rubidium, le molybdate de césium, le paramolybdate d'ammonium (NH₄)₆Mo₇O₂₄.4H₂O, le bis-acétylacétonate de molybdyle MoO₂(C₅H₇O₅)₂, le dioxyde de molybdène-tétraméthylheptadionate MoO₂(TMHD)₂, des molybdène-alcoolates de 1,2-, 1,3- ou 1,4-diols tels que l'éthylèneglycol, le propylèneglycol ou le 1,4-butanediol, l'acide molybdique, le molybdate de tétraéthylammonium, le tungstate de sodium, le molybdate de magnésium, le molybdate de calcium, l'acide tungstique, le tungstate de lithium et l'acide phosphotungstique,
(d) de l'eau et/ou des solvants organiques ou mélanges de solvants organiques et
(e) éventuellement d'autres additifs et adjuvants,
les quantités de (a) + (b) valant de 20 à 89,9 parties en poids, de (c) valant de 0,01 à 5 parties en poids, de (d) valant de 10 à 70 parties en poids et de (e) valant de 0 à 10 parties en poids et la somme des parties en poids des composants (a) à (e) étant égale à 100.

4. Systèmes selon la revendication 3, **caractérisés en ce qu'**on utilise comme polyisocyanates bloqués (a) des isocyanates aliphatiques.

5. Systèmes selon la revendication 3, **caractérisés en ce qu'**on utilise comme polyisocyanates bloqués (a) des isocyanates aromatiques.

6. Systèmes selon la revendication 3, **caractérisés en ce qu'**on utilise comme polyisocyanates bloqués (a) ceux à base d'hexaméthylène-diisocyanate, d'isophorone-diisocyanate, de 4,4'-diisocyanatodicyclohexylméthane, leurs dérivés et/ou mélanges.

7. Systèmes selon les revendications 3 à 6, **caractérisés en ce que** les polyisocyanates (a) sont hydrophilisés.

8. Systèmes selon les revendications 3 à 7, **caractérisés en ce qu'**on utilise comme composé de molybdène et/ou de tungstène (c) des sels de l'acide molybdique et/ou de l'acide tungstique ou des produits de condensation de ceux-ci.

9. Systèmes selon les revendications 3 à 7, **caractérisés en ce qu'**on utilise comme composé de molybdène et/ou de tungstène (c) des ortho- et métamolybdates et/ou -tungstates du lithium, du sodium et du potassium.

10. Procédé pour la préparation des systèmes selon les revendications 3 à 9, **caractérisé en ce qu'**on introduit le composant (c) dans les composants (a) et/ou (b) avant leur dispersion ou leur dissolution dans le composant (d).

11. Procédé pour la préparation des systèmes selon les revendications 3 à 9, **caractérisé en ce qu'**on introduit le composant (c) dans le composant (d) avant la dispersion ou la dissolution du composant (a) et/ou du composant (b) dans celui-ci.

12. Procédé pour la préparation de systèmes aqueux ou dispersables dans l'eau selon les revendications 3 à 9, **caractérisé en ce qu'**on ajoute le composant (c) à un ou plusieurs des composants (a), (b), (d) et/ou (e) avant l'addition de l'eau de dispersion.

13. Utilisation des systèmes selon les revendications 1 à 9 pour la fabrication de vernis, peintures et adhésifs.

14. Subjectiles revêtus avec des revêtements pouvant être obtenus à partir de systèmes selon les revendications 1 à 9.
